# EUROPÄISCHE PATENTSCHRIFT

(11) **EP 2 616 911 B1**
(45) Veröffentlichungstag und Bekanntmachung des Hinweises auf die Patenterteilung: **25.05.2016**
(21) Anmeldenummer: 11757845.0
(22) Anmeldetag: 13.09.2011
(51) Int. Cl.: G06F 1/16, G06F 3/045, B63C 11/02

(54) **TAUCHCOMPUTER MIT BERÜHRUNGSSENSITIVEM DISPLAY UND VERFAHREN ZUR BEDIENUNG DES TAUCHCOMPUTERS**
DIVING COMPUTER WITH TOUCH-SENSITIVE DISPLAY AND METHOD OF OPERATION OF THE DIVING COMPUTER
ORDINATEUR DE PLONGÉE AVEC ÉCRAN TACTILE ET PROCÉDÉ DE COMMANDE DE CET ORDINATEUR DE PLONGÉE

(30) Priorität: 13.09.2010 AT 15122010
(43) Veröffentlichungstag der Anmeldung: 24.07.2013
(73) Patentinhaber: Johnson Outdoors Inc., Racine, WI 53403 (US)
(72) Erfinder: SIEBER, Arne, 5700 Zell am See (AT)
(74) Vertreter: Cohausz & Florack
(86) Internationale Anmeldenummer: PCT/EP2011/065866
(87) Internationale Veröffentlichungsnummer: WO 2012/035021

(56) Entgegenhaltungen:
- WO-A1-2007/122444
- WO-A1-2008/068058
- DE-A1-102007 047 133
- GB-A- 1 310 683
- US-A- 4 990 900
- US-A1- 2005 110 765

## Beschreibung

### Gebiet der Erfindung

Die Erfindung betrifft einen Tauchcomputer,
Ferner betrifft die Erfindung ein Verfahren zum Bedienen eines Tauchcomputers und ein Verfahren zum Herstellen eines Tauchcomputers.

### Hintergrund der Erfindung

Ein Taucher ist Unterwasser einem erhöhten Druck ausgesetzt. So steigt alle 10 m Tiefe der Umgebungsdruck um ca. 1 bar. Um trotz dieses erhöhten Drucks atmen zu können, atmet ein Taucher aus einem Atemregler, welcher das Atemgas, welches in einer Druckflasche mitgeführt wird, auf Umgebungsdruck erniedrigt, In den meisten Fällen atmen Taucher Luft, jedoch werden heutzutage immer öfter auch Gasgemische mit verändertem Sauerstoffgehalt und beispielsweise Helium eingesetzt.

Luft besteht aus rund 78% Stickstoff, 21 % Sauerstoff, 0.9% Argon, 0.04% Kohlendioxid und andere Gasen in Spuren. Henrys Gesetz (benannt nach dem englischen Chemiker William Henry) beschreibt das Löslichkeitsverhalten von Gasen in einer Flüssigkeit - und besagt, dass die Konzentration eines Gases in einer Flüssigkeit proportional zum Partialdruck des Gases über der Flüssigkeit ist. Henrys Gesetz zufolge, kommt es beim Tauchen zu einer Aufnahme von Inertgasen (Stickstoff, Helium,... ) im Körper (in den Geweben, im Blut, etc.). Kehrt der Taucher zur Oberfläche zurück, kommt es zur Abgabe der Inertgase, da der Inertgasdruck im Körper größer als der Umgebungsdruck ist - man spricht hier von einem Inertgasüberdruck. Übersteigt der Inertgasüberdruck einen bestimmten Wert, kommt es zur Inertgasblasenbildung im Körper - der sogenannten Dekompressionskrankheit (oder auch Chaisson Krankheit, *"bends").*

Nachdem erstmals die Inertgasaufnahme beschrieben und experimentell/statistisch bestimmte maximal erlaubte Inertgasüberdrücke angegeben wurde, welche der menschliche Körper noch verträgt ohne einen Dekompressionsunfall *"bends"* zu erleiden wurde darauf aufbauend der so genannte ZH-L16 Algorithmus entwickelt, welcher die Inertgasaufnahme in 16 hypothetischen Geweben mit unterschiedlichen Sättigungshalbwertszeiten und unterschiedlichen maximalen Inertgasüberdrücken beschreibt.

Sind die Inertgasdrücke in den Geweben unter einem bestimmten Wert, und somit der Inertgasüberdruck unter einem bestimmten maximalen Wert, ist eine Rückkehr zur Wasseroberfläche direkt möglich. Man spricht in diesem Fall von einem Nullzeittauchgang, Andernfalls müssen während des Aufstieges so genannte Dekompressionsstopps eingehalten werden, in welchen Inertgas abgeatmet wird und somit der Inertgasüberdruck in den Geweben auf ein sicheres Maß sinkt, bevor der Aufstieg fortgesetzt wird.

Am Anfang des Sporttauchens wurden als Instrumente Tiefenmesser und Uhr verwendet. Tauchgang und Aufstieg zur Oberfläche wurden mit Dekompressionstabellen geplant. In diesen wurden normalerweise die maximale Nullzeit (welche die Zeit angibt, welche man maximal auf einer gewissen Tiefe bleiben kann und anschließend ohne Stopps an die Oberfläche zurückkehren kann) und, falls die Nullzeit überschritten wird, die Dekompressionsstopps (jeweils mit Zeit und Tiefe) angegeben.

Im speziellen, wenn ein Tauchgang nicht auf einer konstanten Tiefe durchgeführt wird (man spricht von Multilevel Tauchgängen), ist eine Berechnung und Planung anhand von Tabellen schwierig.

Im speziellen, wenn ein Tauchgang nicht auf einer konstanten Tiefe durchgeführt wird (man spricht von Multilevel Tauchgängen), ist eine Berechnung und Planung anhand von Tabellen schwierig,

Moderne Tauchcomputer verfügen als Minimum über ein Display, einen Drucksensor, einen integrierten Zeitmesser oder eine Uhr und eine Recheneinheit. Der Tauchcomputer misst kontinuierlich während des Tauchgangs Zeit und Tiefe und berechnet/simuliert aufgrund dieser Daten anhand eines Dekompressionsmodelles die Inertgasaufnahme im Körper in den unterschiedlichen Geweben und berechnet im Anschluss daraus die verbleibende Nullzeit beziehungsweise gibt Indikationen an, auf welcher Tiefe und für wie lange Dekompressionsstopps eingehalten werden müssen. Andere Tauchcomputer berücksichtigen in den implementierten Modellen auch physiologische Parameter wie beispielsweise die Herzrate (EP 1 878 654 A1). Gewöhnliche Tauchcomputer sind beispielsweise in den folgenden Patenten bzw. Patentanmeldungen beschrieben:
US 6,904,382 B2, DE 10 2007 047 133 A1, DE 10 2007 0471 44 A1,
US 7,600,430 62, DE 10 2004 007 986 A1, US 2009/085,865 A1,
WO 02009/046 906 A2, DE 196 49 418 A1, DE 10 2006 028 085 A1,
GB 2,455,389 A, US 5,503,145 A, US 5,806,514 A, US 2005/205 092 A1,
US 2007/283 953 A1, USD541179S1

Auf dem Display vieler Tauchcomputer wird heutzutage auch der Druck der Tauchflaschen angezeigt. Hierfür ist entweder ein Hochdrucksensor (meist um die 250 - 350 bar) im Tauchcomputer integriert und mittels eines Hochdruckschlauches an der ersten Stufe das Atemreglers angeschlossen oder ein kabelloser Drucksender an der ersten Stufe montiert. Verschiedene Hersteller verwenden beispielsweise solche Drucksender, welche auf ein drahtloses und digitales Protokoll mit einer elektromagnetischen Trägerfrequenz von ca. 8 kHz basieren. Passende elektronische Empfängerbausteine, z.B. der so genannte DMR01, hierfür sind am Markt erhältlich. Andere Hersteller verwenden auch eine drahtlose Übertragung, jedoch mit einer Trägerfrequenz von etwa 5 kHz und mit einem unterschiedlichen Übertragungsprotokoll. GB 2,465,872 A beschreibt ein Übertragungsprotokoll basierend auf zwei unterschiedlichen Frequenzen für Unter- und Überwasserbereich.

Eine Alternative zu obigen drahtlosen Übertragungsmethoden ist die optische Übertragung. Hierbei ist wichtig, dass Sender und Empfänger Sichtverbindung haben. Alternativ können auch Lichtleiter zur Datenübertragung einsetzt werden.

Neben der Inertgasaufnahme ist beim Tauchen auch die Inertgasnarkose zu berücksichtigen. Luft besteht zu etwa 78% aus Stickstoff. Typischerweise verwenden Sporttaucher komprimierte Luft oder heutzutage immer öfter auch mit Sauerstoff angereicherte Luft als Atemgas, welches in den Tauchflaschen mitgeführt wird, Stickstoff wirkt jedoch ab einer gewissen Tiefe narkotisch und führt zu dem sogenannten Tiefenrausch. Die Tiefe, ab welcher der Tiefenrausch auftritt, ist von Individuum zu Individuum unterschiedlich und wird außerdem von Tagesverfassung, Wassertemperatur und psychischen Faktoren beeinflusst.

Wenn tiefe und lange Tauchgänge durchgeführt werden, ersetzt man teilweise oder ganz den Stickstoff durch ein weniger narkotisch wirkendes Gas wie zum Beispiel Helium. Man spricht hier vom Mischgastauchen. Tiefe wie auch lange Tauchgänge bewirken hohe Inertgasaufnahmen im Körper und der Aufstieg zur Oberfläche beinhaltet zahlreiche und teilweise lange Dekompresslonsstopps. Um die Dekompression zu beschleunigen, werden zusätzliche Atemgase, welche in separaten Tauchflaschen mitgeführt werden, verwendet. Diese so genannten Dekompressionsgase enthalten typischerweise weniger Inertgase haben jedoch einen erhöhten Sauerstoffanteil. Ab 6 m Tiefe ist eine beschleunigte Dekompression mit reinem Sauerstoff möglich. Tauchen mit mehreren Gasgemischen wird in der Fachsprache als Technisches Tauchen bezeichnet.

Heutzutage sind zahlreiche Tauchcomputer auf dem Markt erhältlich, welche auch Tauchgänge und Dekompressionsprotile mit Mischgas oder mit Sauerstoff angereicherte Luft berechnen können. Werden zur Dekompression mehrere Gasgemische eingesetzt, muss der Taucher am Tauchcomputer beim Gaswechsel Einstellungen vornehmen, um dem Tauchcomputer mitzuteilen, weiches Gasgemisch gerade verwendet wird, sodass der Tauchcomputer die Berechnung korrekt durchführen kann. Zur Einstellung werden normalerweise Tasten verwendet.

Typische Bedienelemente, welche bei Tauchcomputern eingesetzt werden, sind:
- Mechanische Tasten: ein außenliegender Tastknopf bedient über eine O-Ring gedichtete mechanische Durchführung einen Schaiter/Taster im Inneren des druck- und wasserdichten Gehäuses.
- Piezoschalter: Unter einer dünnen Membran (meist aus Aluminium) befindet sich ein Piezoelement. Bei zeitlich gesehen schnellen Druckänderungen erzeugen die Piezoelemente eine elektrische Spannung welche als Schaltsignal ausgewertet werden kann. Der Vorteil von diesen Schaltern ist, dass keine mechanischen Durchführungen notwendig sind und somit eine kostengünstige und mechanisch sehr robuste und zuverlässige Konstruktion möglich ist.
- Magnetschalter: Eine weitere Möglichkeit, die ohne O-Ring Dichtungen auskommt, sind Magnetschalter. Ein magnetfeldsensitives elektrisches Element (Magnetsensor: Reed Kontakt oder Hall Sensor) ist im Inneren des Gehäuses angebracht. Bei einem Schaltvorgang wird ein Magnet in die Nähe des Sensors gebracht und somit ein Schaltvorgang ausgelöst. Diese Lösung wird oft von Herstellern von Unterwasserlampen eingesetzt, aber auch von Tauchcomputerherstellern. Nachteil dieser Technologie ist, dass die zum Schalten eingesetzten Magnete einen Kompass stören können, bzw. einen Einsatz von einem im Tauchcomputer integrierten elektronischen Kompass unmöglich machen.
- Liquivision (GB 2,455,389 A) und Cochran (US 5,899,204 A) verwenden anstatt von Tastern Beschleunigungssensoren. Einfaches Klopfen auf den Tauchcomputer wird bei Cochran mit dem Beschleunigungssensor registriert und verwendet, um zwischen verschiedenen Modi umzuschalten. Liquivision geht einen Schritt weiter und verwendet einen dreidimensionalen Sensor. Somit kann zwischen Klopfen auf verschiedene Seiten des Computers unterschieden und eine einfache Menübedienung realisiert werden.

Da jedoch die Anzahl der Eingabemöglichkeiten durch die Zahl der Tasten limitiert ist, sind oft Einstellungsänderungen nur mit mehreren Tastendrücken vollziehbar, was zeitaufwendig ist und kompliziert sein kann. Dies ist besonders bei Stresssituationen ein Problem. Fällt zum Beispiel beim technischen Tauchen ein Atemgas unvorhergesehen aus, so wechselt der Taucher auf ein alternatives Gasgemisch. Solch eine Situation erfordert konzentriertes und zielgerichtetes Handeln. Ein Wechseln des Atemgases bei Technischen Tauchgängen erfordert auch Einstellungen am Tauchcomputer - eine komplizierte Bedienung eines Tauchcomputers ist ein zusätzlicher Stressfaktor. Sind mehrere Eingaben notwendig, sind diese oft in einer solchen Stresssituation nicht mehr fehlerfrei zu bewerkstelligen. Falsche Einstellungen am Tauchcomputer führen zu inkorrekter Berechnung der Inertgassättigungen und können im Weiteren dann zu Dekompressionsunfällen führen. Die meisten Tauchunfälle sind auf eine Verkettung von mehreren Ursachen zurückzuführen - wobei Stress oftmals eine große Rolle spielt.

Aus der US 2004/168516 A1 ist ein akustisch basiertes System bekannt, welches für ein Touchscreen-System verwendet werden kann und welches ein akustisches Substrat und einen akustischen Transducer aufweist.

Aus der DE 10 2007 047133 A1 wird ein Tauchcomputergehäuse beschrieben, bei welchem zwar die Möglichkeit einen Touchscreen zu integrieren erwähnt wird, jedoch nicht beschrieben wird, wie dieser ausgestaltet sein muss, dass er nicht nur Überwasser sondern auch Unterwasser betreibbar ist.

GB 1 310 683 A offenbart eine Vorrichtung zur Ermittlung von Signalen, welche aus einer Eingabe mittels eines Stiftes auf einer berührungsempfindlichen Eingabeeinheit resultieren. Die ausgelesenen Signale folgen aus dem Kontakt zweier leitfähiger Schichten, welche in unberührtem Zustand durch ein elektrisch nicht leitfähiges Material getrennt gehalten werden und punktuell durch den Eingabestift in Kontakt gebracht werden können. Diese Signale werden mit Hilfe einer elektrischen Schaltung in Koordinaten umgewandelt und ermöglichen mittels dieser resistiven Eingabeeinheit auf einem Display eine punktgenaue Eingabe.

DE 10 2007 047133 A1 offenbart ein Gehäuse eines Tauchcomputers mit einer Anzeigeeinrichtung. Das Gehäuseinnere des Tauchcomputers ist so gestaltet, dass die durch den Umgebungsdruck auf den Tauchcomputer wirkenden Kräfte zumindest teilweise durch Befüllung von Hohlräumen des Gehäuses mit einem Medium mit hohem Kompressionsmodul kompensiert werden können.

Die US 4 990 900 A offenbart ein Bildschirm-Tastfeld, welches auf einem Display montiert sein kann, um punktuelle Eingaben in Koordinaten umzuwandeln. Das transparente Bildschirm-Tastfeld ist in eine obere Lage, bestehend aus einem transparentem Film und einer oberen transparenten Elektrode, sowie eine untere Lage, bestehend aus einem unteren Film und einer unteren Elektrode, und einem Distanzhalter unterteilt. Dieser Distanzhalter besteht aus einer transparenten Flüssigkeit und einem Farbstoff. Durch punktuellen Druck können die Elektroden in Kontakt gebracht und die Koordinaten des Druckpunktes ermittelt werden. Bei einem Verfahren zur Herstellung des Bildschirm-Tastfelds wird durch Zusammenkleben der oberen Lage und unteren Lage an den peripheren Seiten mit Ausnahme einer Öffnung eine Zelle gebildet. Unter verringertem Druck, mit Hilfe kapillarer Kräfte, gelangt die Flüssigkeit in die Zelle, welche anschließend versiegelt wird.

WO 2008/068058 A1 offenbart eine resistive Bedienungseinheit eines portablen elektronischen Geräts, weiche eine flexible elektrisch leitfähige Schicht und eine zweite elektrisch leitfähige Schicht aufweist. Der entstehende Hohlraum zwischen den Schichten ist mit einer transparenten, elektrisch isolierenden Flüssigkeit gefüllt, die unabhängig vom jeweiligen Umgebungsdruck stets dasselbe Volumen einnimmt. Damit ist die Funktionsfähigkeit der resistive Bedienungseinheit u.a. auch in hohen Höhen gegeben.

WO 2007/122444 A1 offenbart eine Methode zur Bestätigung und automatischen Anordnung von Icons mit Hilfe eines berührungsempfindlichen Displays, wobei die automatische Anordnung der Icons vom detektierten Eingabe-Typ abhängt.

US2005/110765 A1 offenbart einen Tauchcomputer mit wasserdichtem Gehäuse und einem berührungssensitiven Display, das eine resistive berührungssensitive Eingabeeinheit umfasst. Ein Hohlraum, der zwischen einer ersten leitfähigen Schicht einer flexiblen Seite und einer zweiten leitfähigen Schicht einer starren Seite ausgebildet ist, ist mit Luft gefüllt. Um zu vermeiden, dass ein Kontakt der beiden leitfähigen Schichten der Eingabeeinheit infolge des erhöhten Umgebungsdrucks unter Wasser fälschlicher Weise als Eingabe interpretiert wird, ist eine elektronische Kompensation der Signale der Eingabeeinheit in Abhängigkeit vom gemessenen Umgebungsdruck vorgesehen. Außerdem, damit das Gehäuse des Tauchcomputers dem hohen Druck unter Wasser standhält, sind alle Lufttaschen im Innern des Tauchcomputers - mit Ausnahme des Hohlraums zwischen den leitfähigen Schichten der resistiven Eingabeeinheit - mit einem silikonbasierten Gel gefüllt.
1.
2.

### Zusammenfassung der Erfindung

Somit mag sich als Aufgabe der Erfindung ergeben, einen Tauchcomputer, ein Verfahren zum Bedienen eines Tauchcomputers und ein Verfahren zum Herstellen eines Tauchcomputers zu schaffen, bei denen insbesondere eine einfache, schnelle und vor allem intuitive Bedienung auch bei umfangreichen Tauchcomputern, welche oft mehrere Menüs aufweisen und nur wenige - oftmals nur zwei - Bedienelemente haben, ermöglicht sein mag.

Diese Aufgabe wird gemäß der Erfindung mittels eines Tauchcomputers, eines Verfahrens zum Bedienen eines Tauchcomputers und eines Verfahrens zum Herstellen eines Tauchcomputers gemäß den Merkmalen der unabhängigen Patentansprüche gelöst. Weitere Ausgestaltungen werden in den abhängigen Patentansprüchen beschrieben.

Es wird ein berührungssensitives Display mit mindestens einer Anzeige und einer durchsichtigen berührungssensitiven Eingabeeinheit, welche vor der Anzeige angebracht ist, geschaffen, wobei die Berührungssensitivität auch Unterwasser und unter erhöhtem Druck gegeben ist. Insbesondere ist das berührungssensitive Display ein Display eines Tauchcomputers, d.h. es wird ein Tauchcomputer geschaffen, welcher ein berührungssensitives Display aufweist.

Es wird ein Verfahren zur Bedienung eines Tauchcomputers geschaffen, wobei Benutzereingaben über ein berührungssensitives Display erfolgen.

Es wird ein Verfahren zum Herstellen elner resistlven berührungssensitiven Eingabeeinheit geschaffen, wobei das Verfahren aufweist, Bereitstellen einer flexiblen Seite, Bereitstellen einer starren Seite, Verbinden der flexiblen Seite und der starren Seite derart, dass ein Hohlraum entsteht, Füllen des Hohlraumes mit einem inkompressiblen Medium durch eine Öffnung und Verschließen der Öffnung. Insbesondere mag sich die Öffnung in der flexiblen Seite und der starren Seite, bzw. nur auf der starren Seite der Eingabeeinheit befinden. Zum Beispiel kann eine Mehrzahl von Öffnungen vorgesehen sein, von denen sich dann eine oder mehrere in der flexiblen Seite und/oder eine oder mehrere in der starren Seite befinden.

Im Falle dass das ganze Display oder der gesamte Tauchcomputer, welcher das Display aufweist, mit einem inkompressiblen Medium, z.B. Öl, vergossen wird, befindet sich die Öffnung oder die Mehrzahl von Öffnungen bevorzugt in oder auf der starren Seite. Das Eingießen mag insbesondere unter Unterdruck oder Vakuum durchgeführt werden. Die Öffnungen in oder auf der starren Seite mögen nach dem Füllen und dem Zusammenbau des Displays bzw. eines Tauchcomputers, in welchem das Display verwendet wird, nicht mehr zu sehen sein, wenn im Gehäuse eine Blende integriert ist.

Alternativ oder zusätzlich mag sich die Öffnung oder die Mehrzahl von Öffnungen zwischen der starren Seite und der flexiblen Seite befinden. Beispielsweise mag sich die Öffnung, alle Öffnungen oder zumindest einige der Mehrzahl von Öffnungen in einer Seitenwand der Eingabeeinheit befinden, welche den Hohlraum begrenzt. Im Falle dass sich die Öffnung in der Seitenwand befindet, mag ein Füllen des Hohlraumes, insbesondere mittels einer Injektionsnadel, durchgeführt werden.

Insbesondere mögen die starre Seite und/oder die flexible Seite ein durchsichtiges oder transparentes Material aufweisen oder aus einem solchen bestehen. Beispiele hierfür mögen Plexiglas, Glas, Acrylglas, ITO, oder transparente Folien sein.

Insbesondere sind auf den Innenseiten bzw. Innenoberflächen, d.h. den Oberflächen, welche Begrenzungsflächen des gebildeten Hohlraumes bilden, elektrisch leitfähige Schichten ausgebildet, welche durch das elektrisch isolierender inkompressible Medium, elektrisch voneinander entkoppelt werden.

Ein Display bzw. eine Eingabeeinheit gemäß einem beschriebenen Aspekt mag beispielsweise den Vorteil haben, dass die berührungssensitive Eingabeeinheit auch mittels eines einfachen und kostengünstigen Herstellungsprozesses hergestellt werden kann.

Die berührungssensitive Eingabeeinheit ist unempfindlich auf homogene Druckbelastungen, welche durch den unter Wasser erhöhten Umgebungsdruck versursacht werden.

Die berührungssensitive Einheit ist als resistive berührungssensitive Einheit ausgestaltet.

Mindestens ein Hohlraum in der berührungssensitiven Einheit ist mit einer elektrisch isolierenden Flüssigkeit gefüllt.

Gemäß einem exemplarischen Ausführungsbeispiel des berührungssensitiven Displays ist mindestens ein Hohlraum mit einem elektrisch isolierenden Gel gefüllt.

Beide Seiten der berührungssensitiven Einheit sind dem Umgebungsdruck ausgesetzt. Die beiden Seiten, Lagen oder Schichten der berührungssensitiven Einheit mögen insbesondere durch eine flexible Seite oder Lage und eine starre Seite oder Lage gebildet sein, welche die beiden Hauptoberflächen einer berührungssensitiven Einheit eines Displays bilden. Insbesondere mag die flexible Seite die Seite sein, welche einem Benutzer zugänglich ist, wohingegen die starre Seite dem Benutzer unzugänglich sein mag, d.h. eine Hinterseite oder Rückseite der berührungssensitiven Einheit bildet, welche durch weitere Teile oder Elemente des Displays verdeckt ist.

Es ist ein berührungssensitives Display mit mindestens einer Anzeige und einer durchsichtigen resistiven berührungssensitiven Eingabeeinheit, welche vor der Anzeige angebracht ist, geschaffen, wobei mindestens ein Hohlraum in der resistiven berührungssensitiven Eingabeeinheit derart mit einem elektrisch isolierenden inkompressiblen Medium gefüllt ist, dass die Berührungssensitivität auch Unterwasser und unter erhöhtem Druck gegeben ist.

Eine über eine Fläche des Displays homogene Druckeinwirkung führt nicht zu einer Verformung einer äußeren, beispielsweise flexiblen, Schicht der berührungssensitiven Eingabeeinheit und somit nicht zu einem Kurzschluss der elektrisch leitfähigen Schichten. Insbesondere ist das berührungssensitive Display bzw. die berührungssensitive Eingabeeinheit derart eingereichtet, dass eine über eine Fläche des Displays homogene Druckeinwirkung nicht zu einer Verformung der berührungssensitiven Eingabeeinheit führt. D.h. die Eingabeeinheit ist unter einer homogenen Druckeinwirkung, wie diese beispielsweise durch den Wasserdruck beim Tauchen bewirkt wird, verformungsfrei bzw. im Wesentlichen verformungsfrei. Hierbei mag der Begriff "im Wesentlichen verformungsfrei" insbesondere bedeuten, dass eine Verformung, die auftritt nicht die Funktionsfähigkeit der Eingabeeinheit beeinträchtigt, d.h. nicht zu einer Berührung bzw. einem Kurzschluss zwischen den beiden den Hohlraum begrenzenden Hauptoberflächen (Ober- und Unterseite des Hohlraumes) kommt. Die Begriffe "verformungsfrei" oder "im Wesentlichen verformungsfrei" bedeuten somit nicht, dass keinerlei Verformung auftreten kann, sondern nur, dass die auftretenden Verformungen nicht die Funktionalität der Eingabeeinheit beeinflussen. Beispielsweise mag die Verformung geringer als ein Schwellwert liegen, welcher abhängig von der Anwendung unterschiedlich sein kann.

Insbesondere, mag das inkompressible Medium, beispielsweise ein Gel oder eine Flüssigkeit sein. Somit ist das Display auch unter Wasser verwendbar. Insbesondere mag ein resistives berührungssensitives Display auf einfache Weise kostengünstig herstellbar sein. Ferner mag ein solches auf einer resistiven berührungssensitiven Eingabeeinheit beruhendes Display auf einfache Weise mittels eines Mikrocontrollers ansteuerbar sein, so dass keine zusätzlichen Peripheriegeräte notwendig sein mögen. Beispielsweise mag für eine resistive berührungssensitive Elngabeeinheit ausreichend sein, eine vierpolige Steckverbindung, z.B. mit einem Flachbandkabel zwischen dem Display oder Touchpanel und einem zugehörigen Mikrokontroller, vorzusehen. Der Mikroprozessor mag auch die notwendige Auswertung von Signalen der Eingabeeinheit übernehmen. Im Gegensatz hierzu benötigen kapazitive Eingabeeinheiten häufig zusätzliche Mikrocontroller. Solche kapazitiven Displays sind beispielsweise aus der WO 1997/018528 bekannt.

Ein weiterer Vorteil eines resistiven Displays bzw. einer resistiven Eingabeeinheit, in welchem ein Hohlraum mit einem inkompressiblen Medium, beispielsweise einer Flüssigkeit oder eines Gels, mag auch sein, dass der Kontrast gegenüber einem herkömmlichen resistiven Displays mit einem luftgefüllten Hohlraum erhöht ist. Bei einem herkömmlichen resistiven Displays muss zuerst Licht von der Rückseite des Displays zur hinteren (starren) Seite, dann durch den Luftspalt oder luftgefüllten Hohlraum und dann durch die flexible (vordere) Seite. Somit kommt es beim herkömmlichen resistiven Display zu mehreren Übergängen zwischen Medien mit deutlich unterschiedlichen Brechungsindices, was zu einer Verringerung des Kontrasts führt. Wird nun der Hohlraum mit einem Gel oder einer Flüssigkeit, z.B. einem Öl, gefüllt, wird der Unterschied im Brechungsindex an den Übergängen reduziert, was zu einer Verbesserung des Kontrasts führen mag. D.h, in einem Ausführungsbeispiel mag das inkompressible Medium derart ausgewählt sein, dass es einen gleichen oder zumindest ähnlichen Brechungsindex wie die flexible und/oder starre Seite der Eingabeeinheit hat. Der Begriff "ähnlich" mag hierbei insbesondere bedeuten, dass sich die Brechungsindices nur in einem Masse unterscheiden, dass ein sich an der Grenzfläche ergebender Reflexionskoeffizient geringer als ein vorgegebener Schwellwert ist. Beispielsweise mag der vorgegebene Schwellwert 0,5, oder 0,4, bevorzugt 0,3, besonders bevorzugt 0,2 sein. Beispielsweise mag sich der Brechungsindex nur zwischen 0% und 70 %, bevorzugt zwischen 0% und 50 %, besonders bevorzugt zwischen 0 % und 25 %, beispielsweise weniger als 15 % oder weniger als 10 % unterscheiden. Beispielsweise mögen die Brechungsindices der starren Seite, der flexiblen Seite und des inkompressiblen Mediums alle im Bereich zwischen 1,5 ± 0,25 (1,25 bis 1,75) liegen, insbesondere mögen die Brechungsindices im Bereich zwischen 1,5 ± 0,1 (1,4 bis 1,6) liegen.

Dies mag insbesondere für den Fall gelten, dass Plexiglas und/oder Glas für die starre und/oder flexible Seite verwendet wird. Auch ein Eingießen des gesamten Displays oder eines Tauchcomputers mit dem Display in Öl kann zu einer Verbesserung des Kontrasts führen.

Es ist ein berührungssensitives Display mit mindestens einer Anzeige und einer durchsichtigen berührungssensitiven Eingabeeinheit, welche vor der Anzeige angebracht ist, geschaffen, wobei mindestens ein Hohlraum in der berührungssensitiven Eingabeeinheit zwischen einer flexiblen Seite, welche an ihrer Innenseite oder Innenoberfläche elektrisch leitfähig beschichtet ist, und einer starren Seite, welche auf ihrer Außenseite oder Außenoberfläche elektrisch leitfähig beschichtet ist, ausgebildet ist. Die Begriffe "Innen-" bzw. "Außen=' mögen hierbei insbesondere bezüglich eines Referenzsystems oder Bezugssystem verwendet werden, bei dem "Außen" in Richtung der Vorderseite des Displays bezeichnet, wohingegen "Innen" in Richtung Rückseite des Displays bezeichnet. In anderen Worten mag die flexible Seite bzw. Lage und die starre Seite bzw. Lage jeweils auf der Oberfläche, welche den Hohlraum begrenzt mit einer elektrisch leitfähigen Schicht beschichtet sein. Ferner ist der Hohlraum mit einem inkompressiblen Medium gefüllt, so dass die Berührungssensitivität auch Unterwasser und unter erhöhtem Druck gegeben ist. Insbesondere, mag das inkompressible Medium, beispielsweise ein Gel oder eine Flüssigkeit sein.

Das Display gemäß einem exemplarischen Aspekt mag möglicherweise einen oder mehrere der folgenden Vorteile aufweisen:
a) Darstellung von situationsbezogenen virtuelle Bedienelementen, welche automatisch in bestimmten Situationen am Bildschirm dargestellt werden
b) Einfache Bedienung
c) Schnelle Bedienung
d) Intuitive Bedienung
e) Druck und wasserresistentes berührungssensitives Display, welches Unterwasser bedienbar ist

Die Darstellung von Bedienelementen auf dem Display kann mit entsprechender Software, welche mit Hilfe von Sensoren (Flaschendrucksensoren, Pulsmesser, Tiefenmesser) automatisch Situationen erkennen kann, generiert werden. So kann beispielsweise mit einem Flaschendrucksensor der momentane Luftverbrauch festgestellt werden. Ist dieser zu hoch, wird eine Warnung abgegeben (Piepser oder Warnzeichen am Display). Ein anders Beispiel betrifft technische Tauchgänge, bei denen Gaswechsel durchgeführt werden. Hier kann der Tauchcomputer mit Hilfe des Umgebungsdrucksensors die optimale Tiefe für den Gaswechsel errechnen, und dann auf dem Display entsprechende Vorschläge machen. Gleichzeitig ist es auch denkbar, dass in diesem Fall die Gestaltung des Displays geändert wird, und beispielsweise virtuelle Bedienelemente eingeblendet werden. Zur besseren und übersichtlicheren Nutzung des Displays können alle virtuellen Knöpfe ausgeblendet sein. Erst wenn der Benutzer das Display berührt, werden die Bedienelemente eingeblendet. Diese Funktionen sind mittels geeigneter Software leicht darstellbar. Schlüsselelement ist jedoch ein Unterwasser bedienbares berührungssensitives Display.

Die Hauptproblemstellung für Tauchcomputer ist daher ein berührungssensitives Display so auszugestalten, dass eine Bedienung auch Unterwasser und unter erhöhtem Druck einwandfrei möglich ist.

Ein Tauchcomputer gemäß der Erfindung löst die Problemstellung mit einem neuartigen resistiven berührungssensitiven Display, in welchem der Spalt zwischen den leitfähigen Schichten anstatt mit Luft mit einer elektrisch isolierenden Flüssigkeit oder Gel gefüllt ist. Typisch wird entweder transparentes und farbloses Silikon Öl oder Silikon Gel verwendet. Wie oben beschrieben, werden Gase unter Druck komprimiert. Anders als Gase, sind aber Flüssigkeiten unter Druck weitgehend Inkompressibel. Auch unter hohem Druck ändert sich deren Volumen nicht. Ist nun der Spalt zwischen unterer und oberer Folie des resistiven Displays mit Öl gefüllt, bleibt dieser Spalt auch unter erhöhtem Außendruck aufrecht und die untere und die obere Folie voneinander elektrisch isoliert. Eine über die Fläche des Displays homogene Druckeinwirkung (beim Tauchen) führt daher nicht zu einer Verformung der Displayfolien. Im Falle von einer Berührung mit einem Finger - was einer inhomogenen Druckeinwirkung entspricht, werden an einer Stelle die Folien mechanisch und elektrisch kontaktiert und die Berührungsposition kann einfach mit einer entsprechenden Elektronik bestimmt werden. An dieser Stelle wird das Öl verdrängt, da jedoch die Folien flexibel ausgestaltet sind, stellt dies kein Problem dar, da das verdrängte Öl nur zu einer temporären leichten nach außen Wölbung der restlichen berührungssensitiven Displayoberfläche führt.

Temperaturschwankungen führen zu Volumenänderungen der Flüssigkeit. Da jedoch der Spalt zwischen den Folien sehr klein ist, führt dies nur zu einer geringen Wölbung der Oberfläche des berührungssensitiven Displays, was die Funktion des Displays keineswegs beeinträchtig (eine erhöhte Temperatur führt zu einer leichten nach außen Wölbung, bei einer erniedrigten Temperatur wölbt sich die Oberfläche leicht nach innen). Durch eine geeignete Materialauswahl, bei der auf gleiche oder zumindest ähnliche Temperaturausdehnungskoeffizienten für die Elemente der berührungssensitiven Einheit und des Öls geachtet wird, mag es jedoch auch möglich sein diesen Temperatureffekt ganz oder zumindest teilweise zu kompensieren. D.h. in einem Ausführungsbeispiel mag das inkompressible Medium derart ausgewählt sein, dass es einen gleichen oder zumindest ähnlichen Temperaturausdehnungskoeffizienten wie die flexible und/oder starre Seite der Eingabeeinheit hat. Beispielsweise mag sich der Temperaturausdehnungskoeffizient nur zwischen 0% und 70 %, bevorzugt zwischen 0% und 50 %, besonders bevorzugt zwischen 0 % und 25 %, beispielsweise weniger als 15 %, unterscheiden.

Virtuelle Bedienelemente: um die Übersichtlichkeit des Displays zu erhöhen, sind alle virtuellen Bedienelemente ausgeblendet. Erst wenn der Benutzer das Display berührt, werden Bedienelemente eingeblendet.
- Einfache Bedienung des Tauchcomputers - Menüpunkte können durch einfaches Antippen ausgewählt werden.
- Situationsbedingte Menüs: Der Tauchcomputer schlägt anhand der Gaseinsteilungen vor, in welcher Tiefe ein Gaswechsel durchzuführen ist. Erreicht man nun diese Tiefe, werden automatisch virtuelle Tasten zur Umstellung der Gase dargestellt.
- Virtuelle Emergency Taste: drückt man diese virtuelle Taste, werden Funktionstasten eingeblendet, mit welchen die Parameter des Tauchcomputers modifiziert werden, um einen Notaufstieg zu berechnen.
- Notizen und Nachrichten: eine virtuelle Tastatur wird eingeblendet. Auf diese Weise kann der Taucher Buchstaben, Wörter oder auch ganze Sätze eingeben. Diese können in Form von Notizen gespeichert werden oder auch als Nachrichten versandt werden (SMS per Mobiltelefon, welches auf der Wasseroberfläche treibt und mit einem Kabel mit dem Tauchcomputer verbunden ist, oder kabellose Lösungen, welche auf Informationsübertragung mit Funk oder Ultraschall basieren).
- Fotoalbum: durch einfaches Tippen auf den Bildschirm können gespeicherte Fotos abgerufen werden. Dies ist insbesondere bei der Bestimmung von Unterwasser Fauna und Flora von Nutzen.

Der mechanische Zusammenbau eines Tauchcomputers mit berührungssensitivem Display geschieht in mehreren Schritten:
1) Herstellung des berührungssensitiven Displays: Das berührungssensitive Display besteht aus zwei Teilen. Dem eigentlichen Display (LCD oder OLED Technologie) und der eigentlichen durchsichtigen und berührungssensitiven Einheit, welche über dem Display angebracht ist. Die Bestandteile der resistiven berührungssensitiven Einheit werden in herkömmlicher Weise gefertigt. Unterteil oder starre Seite (z.B. Glas) und Oberteil oder flexible Seite (z.B. Folie) der berührungssensitiven Einheit werden bis auf mindestens eine Öffnung verschweißt oder verklebt. In einem nächsten Schritt wird durch die Öffnung der Hohlraum zwischen der Folie und dem Glas mit elektrisch isolierendem Öl gefüllt. Um Luftblasen zu vermeiden, geschieht dieser Vorgang vorzugsweise unter Vakuum oder alternativ mit unter Vakuum entgastem Öl. Im nächsten Schritt wird dann die Öffnung/bzw. werden die Öffnungen verklebt oder verschweißt, um das Öl dauerhaft einzuschließen und das Eindringen von Luft zu vermeiden. Nach sorgfältigem Reinigen der berührungssensitiven Einheit wird diese in den Rahmen gelegt und allseitig mit einem geeigneten Kleber (beispielsweise Epoxid basierte Kleber) eingeklebt. Handelt es sich um eine Kleinserie, ist es eventuell kostengünstiger, auf kommerziell erhältliche berührungssensitive Einheiten zurückzugreifen, und diese durch die üblicherweise vorhandene Druckausgleichsöffnung mit Öl zu befüllen. Hierfür ist eine Mikroinjektionsnadel (Durchmesser <200-300 µm) erforderlich. Dieser Prozess ist jedoch sehr zeitaufwändig und erfordert unter anderem Arbeiten unter einem Mikroskop oder einer starken Vergrößerungslinse, um beim Einführen der Nadel die berührungssensitive Einheit nicht zu beschädigen.
2) Anschließend wird die Elektronik zusammen mit dem eigentlichen Display in den Rahmen gelegt.
3) Im nächsten Schritt wird die gesamte Elektronik inklusive dem Display mit Silikongel oder Silikonöl vergossen. Somit wird die Elektronik gegen Wasser geschützt. Gleichzeitig wird aber durch das Gel der Umgebungsdruck direkt auf die Hinterseite der Touch-Einheit übertragen, sodass von allen Seiten ein homogener Umgebungsdruck auf die berührungssensitive Einheit einwirkt.

Alternativ zu den obigen Schritten 1 - 3 kann auch die starre Rückseite der berührungssensitiven Einheit mit einer oder mehreren Öffnungen versehen werden, welche vorzugsweise an den Ecken angebracht werden. Nach der Montage des gesamten Tauchcomputers wird dieser unter Vakuum mit Öl, vorzugsweise Silikonöl gefüllt, wodurch dann durch die Öffnungen auch der Hohlraum in der berührungssensitiven Einheit gefüllt wird. Für einen einfachen Befüllvorang ist ein Silikoöl mit niedriger Viskosität von Vorteil.

### Kurzbeschreibung der Figuren

Weitere Vorteile und Merkmale der vorliegenden Erfindung ergeben sich aus der folgenden beispielhaften Beschreibung derzeit bevorzugter Ausführungsformen. Die einzelnen Figuren der Zeichnung dieser Anmeldung sind lediglich als schematisch anzusehen.
Fig. 1 zeigt eine schematische Abbildung eines Displays.
Fig. 2 und 3 zeigen Details des Displays aus Fig. 1.
Fig. 4 zeigt schematisch einen elektronischen Aufbau eines Displays

### Ausführliche Beschreibung der Figuren

Im Folgenden werden einleitend kurz einige berührungssensitive Displays unterschiedlicher Technologien aufgezählt:

Resistive berührungssensitive Displays (4 Draht oder 5 Draht) bestehen aus zwei elektrisch leitfähigen durchsichtigen Folien, welche in einem bestimmten Abstand voneinander angebracht werden. Zwischen den Folien ist ein schmaler mit Luft gefüllter Hohlraum. Alternativ dazu gibt es auch Ausführungen, welche aus einer leitfähigen flexiblen Folie und einer mechanisch stabilen Scheibe bestehen. Die elektrische Leitfähigkeit wird typisch durch eine durchsichtige und elektrisch leitfähige Beschichtung erreicht. Ein Fingerdruck bringt nun untere und obere Folie miteinander mechanisch und in Folge elektrisch in Kontakt. Die Folien verhalten sich wie ein Paar von Spannungsteilern. Anhand der gemessenen Spannungen in x und y Richtung kann die Position des Fingers einfach errechnet werden. Leider ist ein Einsatz solch eines Displays Unterwasser nicht möglich, da durch den zunehmenden Wasserdruck die Luft im Hohlraum komprimiert wird und somit andauernd eine elektrische Verbindung zwischen oberer und unterer Folie hergestellt wird. Somit ist eine Bedienung unter Druck nicht möglich.

Kapazitive berührungssensitive Displays bestehen aus einem elektrischen Isolierkörper - typisch Glas - welcher mit optisch transparenten Beschichtungen (beispielsweise ITO) ausgestattet ist. Berührt man nun das Display, so verändert sich die Ladung an diesem Punkt, welche detektiert und ausgewertet wird. Gerade in Salzwasser, welches elektrisch gut leitfähig ist, ist solch ein Bedienelement nicht einsetzbar, da einerseits die Dielektrizitätskonstante von Salzwasser und die des Fingers in ähnlichen Bereichen liegt und schwer unterscheidbar ist und andererseits elektrische Ladungen durch die gute elektrische Leitfähigkeit des Wassers kurzgeschlossen werden. Trägt man Handschuhe, ist die Funktion eines kapazitiven berührungssensitiven Displays, oft beeinträchtigt.

Optische Berührungssensitive Displays basieren auf einer Reihe von Infrarot Sendedioden und Detektoren welche in x und y Richtung am Rande des Displays aufgereiht sind und die ein x-y Raster von kleinen Lichtschranken formen. Ein Objekt / Finger, welches/r das Display berührt, unterbricht an einer Stelle die Infrarot-Lichtstrahlen. Mit einer entsprechenden Elektronik wird dann die Berührungsposition errechnet. Ein großer Vorteil dieser Displays ist, dass sie auch mit Handschuhen bedienbar sind und robust ausgeführt werden können. Sie werden oft in Geräten für Außenanwendungen eingesetzt. Prinzipiell könnte man solch eine Bedieneinheit auch Unterwasser einsetzten. Nachteilig bei dieser Art von Displays ist jedoch der hohe Stromverbrauch, welcher für den Betrieb der IR Sendedioden notwendig ist. Auch kann es durch Wassertrübung und Schwebeteilehen im Wasser zu fehlerhaften Eingaben führen. Zusätzliche erschwert die Integration der Sende- und Empfangsdioden die Konstruktion, was zu einem hohen Herstellungspreis führt. Ein optisches berührungssensitives Display wird in US 2010/201639 A1 beschrieben.

Diese berührungslosen Bedienelemente - in der Fachsprache Touch Screens oder auch Touch Displays genannt - bieten eine Alternative zu Bedienelementen mit herkömmlichen Tasten. Eingaben können hier direkt durch Berühren des Displays gemacht werden. Eine intuitive Bedienung ist einfach zu gestalten, da virtuelle Bedienelemente - wie zum Beispiel Bedienknöpfe oder eine Tastatur einfach auf dem Display dargestellt werden (man spricht von virtuellen Bedienelementen), und der Benutzer Eingaben machen kann, indem er den Bildschirm berührt. Solche Displays werden heute in großer Zahl bei Computern, Packet PC's (kleine Computer mit einer Bildschirmdiagonale von ca. 3-4") und Mobiltelefonen eingesetzt.

Akustische, kapazitive und optische berührungssensitive Einheiten haben jedoch gegenüber einer resistiven Eingabeeinheit den Nachteil, dass zur Auswertung der elektrischen Signale ein zusätzlicher Kontroller und eine größere Anzahl von elektrischen Leitungen zwischen der elektronischen Platine und der berührungssensitiven Einheit benötigt wird. Ein resistives Display hat den Vorteil, dass eine geringere Anzahl von Leitungen, meist 4 oder 5 ausreichen. Diese werden oft als flexible Flachbandleitung ausgebildet. Zur Auswertung wird ein Analog Digital Wandler benötigt. Moderne Mikrokontroller wie der Atmega644 von Atmel verfügen über einen solchen AD-Wandler. Zusätzlich können die Pins des Mikrokontrollers auch als logische Eingänge oder logische Ausgänge konfiguriert werden. Eine resistive berührungssensitive Eingabeeinheit kann somit sehr einfach und somit auch kostengünsig ohne zusätzlichen Hardwareaufwand ausgelesen werden:
Beispielsweise wird die obere und die untere Elektrode der berührungssensitiven Einheit an Pin PAO und PA1 angelegt, und die rechte und linke Elektrode an PA2 und PA3.
Im ersten Schritt werden PAO und PA1 als Ausgänge, und PA2 und PA3 als Analogeingänge konfiguriert. PAO wird auf high und PA1 auf low geschalten und die Spannung an PA2 und PA3 gemessen.
Im nächsten Schritt werden PA2 und PA3 als Ausgänge und PAO und PA1 als Analogeingänge konfiguriert. PA2 wird auf high und PA1 auf low gelegt, und die Spannung an PAO und PA1 gemessen.
Im dritten Schritt wird basierend auf den gemessenen Spannungen die Berührungsposition bestimmt.

Im Standby Betrieb werden beispeilsweise PAO und PA1 als Ausgänge konfiguriert und auf low gelegt. PA2 und PA3 werden als Logische Eingänge konfiguriert und über einen hochohmigen Pullup Widerstand , etwa 1 Megaohm, auf high gelegt. Wird das berührungssensitive Display berührt und kommen die beiden leitfähigen Schichten in Kontakt, geht der logische Pegel von PA2 und PA3 von high auf low, wodurch ein Interrupt ausgelöst werden kann.

Mit minimalem Softwareaufwand ist es also möglich, eine resisitives berührungssensitve Eingabeeinheit auszulesen. Dies ist der Grund, warum diese Eingabeeinheiten große Verbreitung finden und in vielen elektronsichen Geräten Anwendung finden.
Nachteilig dieser Technologie ist jedoch, daß ein in der Fachsprache sogenannter Multi touch, bei dem die Einheit an mehreren Punkten gleichzeitig berührt wird, nicht ausgewertet werden kann. Für die relative einfache Bedienung eines Tauchcomputers ist dies jedoch kein Problem.

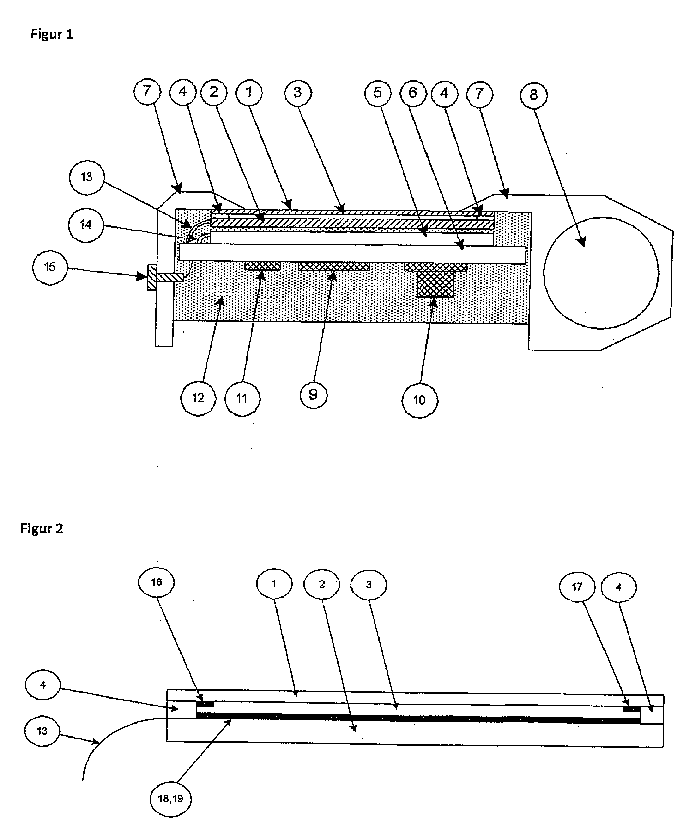

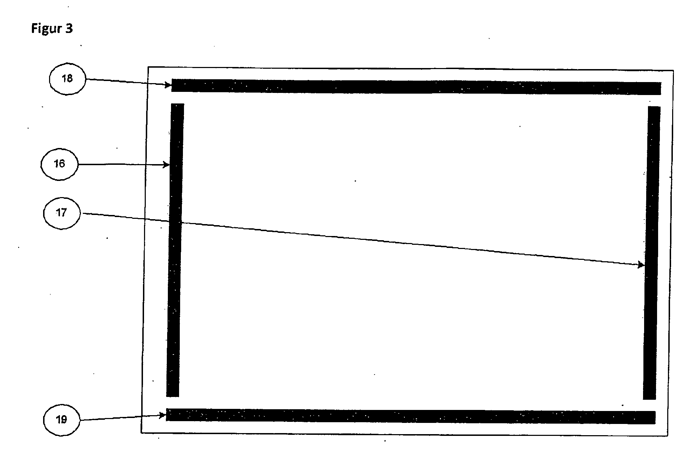

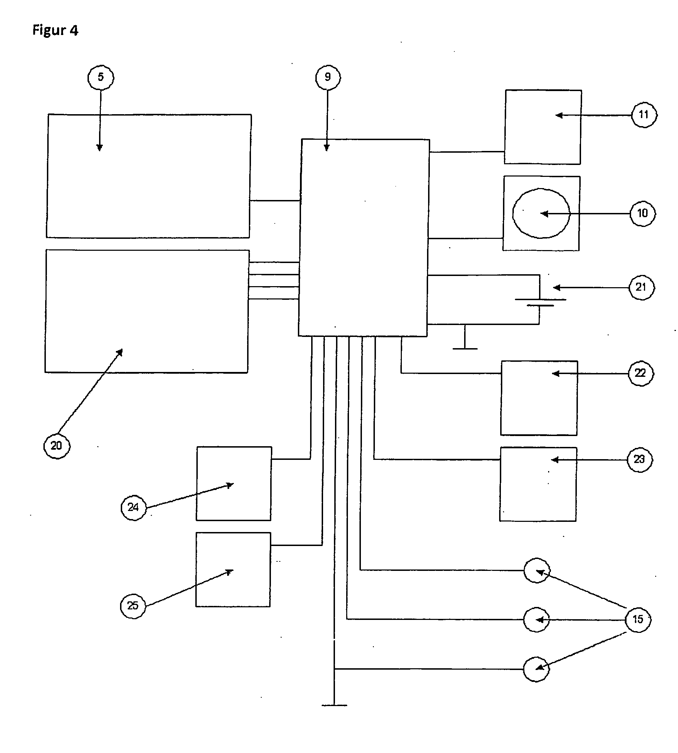

Figur 1 zeigt den Aufbau des Tauchcomputers. Oberhalb des LCD/OLED Displays 5 ist die berührungssensitive Einheit 20 angebracht. Die berührungssensitive Einheit 20 ist in Figur 2 und 3 näher beschrieben und besteht aus den oder weist die vier Hauptkomponenten 1, 2 3 und 4 auf. Die flexible Seite 1 der berührungssensitiven Einheit ist auf der Innenseite elektrisch leitfähig beschichtet, die starre Seite 2, üblicherweise aus Glas gefertigt, auf der Außenseite. In anderen Worten mag die flexible Seite 1 auf einer ersten Oberfläche, welche zu dem Inneren des Displays hin (in der Fig. 2 die untere Oberfläche der flexiblen Seite 1) angeordnet ist, elektrisch leitfähig beschichtet sein, wohingegen die starre Seite 2 oder Lage, auf einer zweiten Oberfläche, welche zu der starren Seite gehört und der ersten Oberfläche der ersten Seite 1 gegenüber liegt (in der Fig. 2 die obere Oberfläche der starren Seite 2) elektrisch leitfähig beschichtet sein. Um einen direkten Kurzschluss der beiden leitfähigen Schichten zu vermeiden, sind die beiden Schichten durch Abstandhalter 4 voneinander getrennt. Der dadurch entstehende Hohlraum 3 zwischen 1 und 2 ist mit Silikonöl gefüllt. Unterhalb des Displays 5 ist eine elektronische Platine 6 angebracht. Die Anschlüsse 13 der berührungssensitiven Einheit 20 sind mit dieser Platine elektrisch verbunden (entweder mittels eines Steckers oder angelötet). Der Aufbau der elektronischen Platine ist in Figur 4 näher beschrieben. Die Hauptkomponenten sind ein Drucksensor 10, ein Speicherchip 11 und ein Mikroprozessor 9. Die berührungssensitive Einheit 20 ist fest mit dem Gehäuse 7 mit Epoxidharz verklebt. Das Gehäuse 7 ist mit drei Wasserkontakten 15) ausgestattet und mit einem Batteriefach 8 ausgestattet. Diese können verwendet werden, um festzustellen, wann der Tauchcomputer untergetaucht wird. Dies geschieht mittels Widerstandsmessung zwischen den Kontakten. Alternativ können diese Kontakte an Land verwendet werden, um eine Verbindung mit einem Personal Computer (PC) herzustellen. Mittels dieser Verbindung können Tauchgangsdaten aus dem Speicherchip ausgelesen werden oder die Firmware des Tauchcomputers neu programmiert werden. Langwellenempfänger und ein Speicherchip können vorhanden sein. Die Elektronik wird beispielsweise mit einer 3V Lithium Batterie (CR2) versorgt, welche in einem Wasser und druckdichten Batteriefach 8 im Gehäuse untergebracht ist.

Optional ist der Tauchcomputer noch mit einem wasserdichten Stecker ausgestattet, welcher über drei analoge Eingänge, einen digitalen Ausgang und eine serielle Schnittstelle verfügt. Die drei analogen Eingänge können genutzt werden, um beispielsweise die Signale von Sauerstoffsensoren in einem Kreislaufgerät einzulesen. Der digitale Ausgang kann genutzt werden, um das Magnetventil eines geschlossenen Kreislaufgerätes anzusteuern. An der seriellen Schnittstelle können zusätzliche Geräte, wie zum Beispiel ein Sauerstoffsättigungsmessgerät (Pulsoximeter) oder eine GPS/GSM Mobilfunkeinheit, welche in einer Boje untergebracht ist, angeschlossen werden.

Der Innenraum des Tauchcomputers wird mit einem inkompressiblen Medium beispielsweise einem Silikongel 12 (Silgel der Firma Wacker) ausgefüllt. So wird die Elektronik vor Wasser geschützt. Gleichzeitig wird aber durch das Gel der Wasserdruck auf den Drucksensor 10 übertragen und somit eine korrekte Druckmessung ermöglicht. Weiters wird auch der Umgebungsdruck auf die Hinterseite der berührungssensitiven Einheit übertragen. Somit ist der Druck auf der Vorder- und Hinterseite des Displays immer gleich groß und im Normalfall homogen. Dies hat den Vorteil, dass der Tauchcomputer nicht mit einer druckfesten Frontscheibe ausgestattet werden muss.

Figur 2 und Figur 3 zeigen den detaillierten Aufbau der berührungssensitiven Einheit 20. Figur 2 detailliert den Querschnitt und Figur 3 die Aufsicht von oben. Die flexible Folie 1 bildet zusammen mit der (Glas)scheibe 2 und den Abstandhaltern 4 einen Hohlraum 3, welcher mit Silikonöl gefüllt ist. Die flexible Seite 1 ist auf der Unterseite und die starre Seite 2 auf der Oberseite mit einer transparenten elektrisch leitfähigen Schicht ausgestattet. Die Abstandhalter 4 verhindern, dass es zu einer Kontaktierung kommt. Berührt jedoch der Benutzer das Display, werden, da die Oberseite flexibel ausgeführt ist, an dem Berührungspunkt die beiden Folien miteinander mechanisch und elektrisch in Verbindung gebracht. Die elektrischen Beschichtungen der Oberseite 1 der berührungssensitiven Einheit sind mit zwei Elektroden 18 und 19 kontaktiert, die Beschichtungen der Scheibe 2 mit den Elektroden 16 und 17. Der Widerstand der elektrischen Schichten beträgt üblicherweise zwischen 100 und mehreren 1000 Ohm. Die Berührungspositionsdetektion geschieht nun folgendermaßen. Im ersten Schritt wird eine Elektrode 18 der beiden Elektroden mit der Versorgungsspannung verbunden und die zweite Elektrode 19 mit der elektrischen Masse. Werden die elektrischen Schichten durch Berührung der Folie 1 elektrisch an einem Punkt in Kontakt gebracht, so kann an den Elektroden 16 und 17 eine Spannung gemessen werden, welche von der Position des Berührungspunktes abhängt (je näher der Berührungspunkt an der Elektrode 18 ist, desto höher ist die Spannung). Somit lässt sich die Y Koordinate des Berührungspunktes bestimmen. Die X Koordinate wird bestimmt, indem die Elektrode 16 an Masse gelegt wird und die Elektrode 17 mit der Versorgungsspannung und die Spannung an den Elektroden 18 und 19 gemessen wird. Die Elektroden sind mittels einer Flachbandleitung 13 mit der elektronischen Platine 6 und weiter dann mit dem Mikroprozessor 9 verbunden.

Figur 4 beschreibt schematisch den elektronischen Aufbau: Herzstück der elektronischen Platine ist ein 8 Bit Mikroprozessor 9 (z.B. Atmega1284P, Atmei). Zur Druck/Tiefenmessung wird beispielsweise ein digitaler Drucksensor 10 der Schweizer Firma Intersema (MS5541) eingesetzt. Ein graphisches LC Display 5 (z.B. Elecronic Assembly, EA DOGM 128-6) ist am Serial Peripheral Interface (SPI) des Mikroprozessors angeschlossen. Als Ausgangsbasis für die berührungssensitive Einheit 20 wird beispielsweise eine berührungssensitive Eingabeeinheit der Firma Electronic Assembly (EA TOUCH128-1) eingesetzt. Die Einheit wird vor dem Einbau geöffnet, mit Silikonöl befüllt und anschließend neu verklebt. Die vier Elektroden 16, 17, 18 und 19 werden mit den Anschlüssen PortA 0, 1,2 und 3 des Mikroprozessors verbunden. Die Anschlüsse von PortA können per Software entweder als Ein- oder Ausgänge oder als Analogeingänge konfiguriert werden, was ein einfaches Auslesen der berührungssensitiven Einheit ermöglicht. Wird der Tauchcomputer nicht verwendet, wird ein Stromsparmodus (Sleep Modus) aktiviert. In diesem Modus werden viele elektronische Komponenten abgeschaltet und somit der Gesamtstromverbrauch auf wenige µA vermindert. In diesem Modus werden die Elektroden 18 und 19 elektronisch mit Masse verbunden und die Spannung an den Elektroden 16 und 17 eingelesen. Die Elektroden 16 und 17 werden über einen sogenannten Pullup Widerstand mit der Versorgungsspannung verbunden. Berührt nun jemand die berührungssensitive Einheit, sinkt die Spannung an den Elektroden 16 und 17 und ein Hardwareinterrupt wird ausgelöst. Dieser wird dazu verwendet, um den Tauchcomputer aus dem Stromsparmodus (oder Sleep Modus) "aufzuwecken". Zur Speicherung von Tauchgangsdaten ist ein Flash Speicher 11 integriert (z.B. Atmel, Dataflash). Ein Infrarotempfänger 22 erlaubt Empfang von Falschendruckdaten von einem optischen Flaschendrucksender. Hierzu wird an der Tauchflasche ein Flaschendrucksender angeschlossen, welcher den Flaschendruck misst und in Form von einem kodierten Infrarotsignal an den Tauchcomputer sendet. Das Infrarotlicht kann entweder durch das Wasser oder mittels einer Glasfaser übertragen werden.

Alternativ dazu kann auch die Übertragung mit Licht in einer anderen Wellenlänge verwendet werden. Ein 5 kHz Langwellenempfänger 23 erlaubt den Empfang von Signalen von Flaschendrucksendern, z.B. der Firma Suunto. Zusätzlich können mit diesem Empfänger auch Signale von einem Herzfrequenzbrustgurt ausgewertet werden. Optional kann der Tauchcomputer mit einem neigungskompensierten Kompass ausgerüstet werden. Die benötigten elektronischen Bauteile sind dann ein 3-achs Magnetometer 24 (z.B. HMC5843, Honeywell) zur Messung des Magnetfeldes und ein analoger 3-achs Beschleunigungssensor 25 (z.B. MMA7341, Freescale) zur Lageerkennung und Neigungskompensierung des Magnetometers. Zur elektrischen Versorgung wird eine 3V Lithium Batterie eingesetzt (21) (CR2).

Es wird somit ein Display geschaffen, bei dem ein resistives berührungssensitives Display so ausgestaltet wird, dass der Hohlraum zwischen den leitfähigen Folien anstatt mit Luft mit einer elektrisch isolierenden Flüssigkeit gefüllt ist, wodurch das berührungssensitive Display unempfindlich gegenüber erhöhtem Umgebungsdruck und Wasser wird und gleichzeitig die Berührungssensitivität erhalten bleibt. Durch die Darstellung von virtuellen Bedienknöpfen auf dem Display, welche durch Berühren oder Antippen des berührungssensitiven Displays angewählt werden können, ist eine schnelle, einfache und intuitive Bedienung eines Tauchcomputers möglich, insbesondere wenn die Knöpfe automatisch und situationsbezogen dargestellt werden. Zur automatischen Erkennung von unterschiedlichen Situationen werden Signale von verschiedenen Sensoren ausgewertet (beispielsweise Tiefensensor/Drucksensor, Tauchflaschendrucksensoren, Herzratensensor oder Lichtsensor).

Ein solches Display mag von einem Benutzer auf einfache Art und Weise benutzbar sein. Hierzu presst oder drückt der Benutzer mit seinen Fingern oder auch einem Stift oder einem ähnlichen Gegenstand auf das Display, d.h. die flexible Seite, welche sich auf der Oberseite des Displays befindet. Durch den punktuellen Druck kommt die Folie mit der starren Seite, welche sich auf der gegenüberliegenden Seite des gefüllten Hohlraumes befindet in Kontakt. Da beide Seiten auf den Oberflächen, welche die Begrenzung des Hohlraumes bilden, elektrisch leitend beschichtet sind, kommt es zu einer elektrischen Verbindung, was wiederum zu einem detektierbaren und weiterverarbeitbaren Signal führt.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Tauchcomputer mit einem berührungssensitiven Display mit einer Anzeige (5) und einer durchsichtigen resistiven berührungssensitiven Eingabeeinheit (20), welche vor der Anzeige (5) angebracht ist, wobei ein Hohlraum (3) in der resistiven berührungssensitiven Eingabeeinheit (20) derart mit einem elektrisch isolierenden inkompressiblen Medium gefüllt ist, dass die Berührungssensitivität auch unter Wasser und unter erhöhtem Umgebungsdruck gegeben ist,
wobei der Hohlraum (3) zwischen einer ersten leitfähigen Schicht einer flexiblen Seite (1) und einer zweiten leitfähigen Schicht einer starren Seite (2) ausgebildet ist,
wobei der Tauchcomputer eine Elektronik aufweist, und
wobei die Elektronik inklusive der Anzeige (5) des Displays mit einem elektrisch isolierenden inkompressiblen Medium vergossen ist, so dass von allen Seiten ein homogener Umgebungsdruck auf die resistive berührungssensitive Eingabeeinheit (20) einwirkt.

2. Tauchcomputer gemäß Anspruch 1, wobei das elektrisch isolierende inkompressible Medium im Hohlraum (3) der Eingabeeinheit (20) ein elektrisch isolierendes Öl, insbesondere Silikonöl, oder ein elektrisch isolierendes Gel ist.

3. Tauchcomputer gemäß Anspruch 2, wobei beide Hauptoberflächen der flexiblen Seite (1) dem Umgebungsdruck ausgesetzt sind.

4. Tauchcomputer gemäß Anspruch 2 oder 3, wobei das elektrisch isolierende inkompressible Medium in dem Hohlraum (3) der Eingabeeinheit (20) derart ausgewählt ist, dass es einen ähnlichen Brechungsindex wie die flexible und/oder starre Seite der Eingabeeinheit hat.

5. Verfahren zur Bedienung eines Tauchcomputers gemäß einem der Ansprüche 1 bis 4, wobei Benutzereingaben über das berührungssensitive Display des Tauchcomputers erfolgen.

6. Verfahren gemäß Anspruch 5, wobei Bedienelemente auf dem Display dargestellt werden.

7. Verfahren gemäß Anspruch 6, wobei Bedienelemente automatisch und situationsbezogen dargestellt werden.

8. Verfahren gemäß einem der Ansprüche 5 bis 7 wobei durch Berührung der berührungssensitiven Eingabeeinheit ein Stromsparmodus des Tauchcomputers beendet wird.

9. Verfahren zum Herstellen eines Tauchcomputers mit einer Elektronik und einem berührungssensitiven Display mit einer Anzeige (5) und einer durchsichtigen resistiven berührungssensitiven Eingabeeinheit (20), wobei das Verfahren folgende Schritte aufweist:
Bereitstellen einer flexiblen Seite (1) der resistiven berührungssensitiven Eingabeeinheit (20),
Bereitstellen einer starren Seite (2) der resistiven berührungssensitiven Eingabeeinheit (20),
Verbinden der flexiblen Seite (1) und der starren Seite (2) derart, dass ein Hohlraum (3) entsteht, wobei der Hohlraum (3) zwischen einer ersten leitfähigen Schicht der flexiblen Seite (1) und einer zweiten leitfähigen Schicht der starren Seite (2) ausgebildet wird,
Füllen des Hohlraumes (3) mit einem elektrisch isolierenden inkompressiblen Medium durch eine Öffnung,
Verschließen der Öffnung, und
Vergießen der Elektronik inklusive der Anzeige (5) des Displays mit einemelektrisch isolierenden inkompressiblen Medium, so dass von allen Seiten ein homogener Umgebungsdruck auf die resistive berührungssensitive Eingabeeinheit (20) einwirkt.

10. Verfahren gemäß Anspruch 9,
wobei die Öffnung sich in der flexiblen Seite und/oder in der starren Seite der Eingabeeinheit und/oder in einer Seitenwand des Hohlraumes befindet.

## Claims

1. Diving computer with a touch-sensitive display with an indicator (5) and a transparent resistive touch-sensitive input unit (20), which is installed in front of the indicator (5), wherein a cavity (3) in the resistive touch-sensitive input unit (20) is filled with an electrically insulating incompressible medium such that the touch insensitivity is also given under water and under elevated ambient pressure, wherein the cavity (3) is formed between a first conductive layer of a flexible side (1) and a second conductive layer of a rigid side (2),
wherein the diving computer has an electronics system, and
wherein the electronics system including the indicator (5) of the display is encapsulated with an electrically insulating incompressible medium, so that a homogeneous ambient pressure acts on the resistive touch-sensitive input unit (20) from all sides.

2. Diving computer according to Claim 1, wherein the electrically insulating incompressible medium in the cavity (3) of the input unit (20) is an electrically insulating oil, in particular silicone oil, or an electrically insulating gel.

3. Diving computer according to Claim 2, wherein both main surfaces of the flexible side (1) are exposed to the ambient pressure.

4. Diving computer according to Claim 2 or 3, wherein the electrically insulating incompressible medium in the cavity (3) of the input unit (20) is selected such that it has a refractive index similar to the flexible and/or rigid side of the input unit.

5. Method for operating a diving computer according to any one of Claims 1 to 4, wherein the user inputs are made by means of the touch-sensitive display of the diving computer.

6. Method according to Claim 5, wherein operating elements are depicted on the display.

7. Method according to Claim 6, wherein operating elements are depicted automatically and situationally.

8. Method according to any one of Clams 5 to 7, wherein by touching the touch-sensitive input unit a power save mode of the diving computer is ended.

9. Method for the production of a diving computer with an electronics system and a touch-sensitive display with an indicator (5) and a transparent resistive touch-sensitive input unit (20), wherein the method has the following steps:
providing a flexible side (1) of the resistive touch-sensitive input unit (20),
providing a rigid side (2) of the resistive touch-sensitive input unit (20),
connecting the flexible side (1) and the rigid side (2) such that a cavity (3) arises, wherein the cavity (3) is formed between a first conductive layer of the flexible side (1) and a second conductive layer of the rigid side (2),
filling the cavity with an electrically insulating incompressible medium through an opening,
closing the opening, and
encapsulating the electronics system including the indicator (5) of the display with an electrically insulating incompressible medium, so that a homogeneous ambient pressure acts on the resistive touch-sensitive input unit (20) from all sides.

10. Method according to Claim 9,
wherein the opening is located in the flexible side and/or in the rigid side of the input unit and/or in a side wall of the cavity.

## Revendications

1. Ordinateur de plongée comprenant un écran tactile avec un affichage (5) et une unité de saisie (20) tactile, transparente et résistive qui est placée devant l'affichage (5), dans lequel un espace creux (3) dans l'unité de saisie (20) tactile et résistive est ainsi rempli d'un agent isolant électrique incompressible que la sensibilité tactile est fournie également sous l'eau et avec une pression environnante plus élevée, dans lequel l'espace creux (3) est formé entre une première couche conductrice d'un côté flexible (1) et une seconde couche conductrice d'un côté rigide (2),
dans lequel l'ordinateur de plongée présente une électronique, et
dans lequel l'électronique y compris l'affichage (5) de l'écran est encapsulée avec un agent isolant électrique incompressible, de sorte que de tous côtés, une pression environnante homogène agisse sur l'unité de saisie (20) tactile et résistive.

2. Ordinateur de plongée selon la revendication 1, dans lequel l'agent isolant électrique incompressible dans l'espace creux (3) de l'unité de saisie (20) est une huile isolante électrique, en particulier de l'huile de silicone ou un gel isolant électrique.

3. Ordinateur de plongée selon la revendication 2, dans lequel les deux surfaces principales du côté flexible (1) sont exposées à la pression environnante.

4. Ordinateur de plongée selon la revendication 2 ou 3, dans lequel l'agent isolant électrique incompressible dans l'espace creux (3) de l'unité de saisie (20) est ainsi sélectionné qu'il a un indice de réfraction similaire au côté flexible et/ou rigide de l'unité de saisie.

5. Procédé d'utilisation d'un ordinateur de plongée selon l'une des revendications 1 à 4, dans lequel les saisies de l'utilisateur s'effectuent par le biais de l'écran tactile de l'ordinateur de plongée.

6. Procédé selon la revendication 5, dans lequel des éléments de commande sont représentés sur l'écran.

7. Procédé selon la revendication 6, dans lequel des éléments de commande sont représentés automatiquement et en rapport avec la situation.

8. Procédé selon l'une des revendications 5 à 7, dans lequel il peut être mis fin à un mode d'économie d'énergie de l'ordinateur de plongée par le contact de l'unité de saisie tactile.

9. Procédé de fabrication d'un ordinateur de plongée comprenant une électronique et un écran tactile avec un affichage (5) et une unité de saisie (20) tactile, transparente et résistive, dans lequel le procédé comprend les étapes suivantes :
fourniture d'un côté flexible (1) de l'unité de saisie fourniture d'un côté rigide (2) de l'unité de saisie (20) tactile et résistive,
liaison du côté flexible (1) et du côté rigide (2) de façon à produire un espace creux (3), dans lequel l'espace creux (3) est formé entre une première couche conductrice du côté flexible (1) et une seconde couche conductrice du côté rigide (2),
remplissage de l'espace creux (3) avec un agent isolant électrique incompressible à travers une ouverture,
fermeture de l'ouverture, et
encapsulage de l'électronique y compris de l'affichage (5) de l'écran avec un agent isolant électrique incompressible, de sorte que de tous côtés, une pression environnante homogène agisse sur l'unité de saisie (20) tactile et résistive.

10. Procédé selon la revendication 9,
dans lequel l'ouverture se trouve dans le côté flexible et/ou dans le côté fixe de l'unité de saisie et/ou dans une paroi latérale de l'espace creux.
